# EUROPEAN PATENT APPLICATION

(11) **EP 1 626 247 A2**
(43) Date of publication of application: **15.02.2006**
(21) Application number: 05016066.2
(22) Date of filing: 25.07.2005
(51) Int. Cl.: G01B 5/255

(54) **Support device**

(30) Priority: 06.08.2004 IT mo20040210
(71) Applicant: Ferrari, Gino, 42015 Correggio (RE) (IT); Maioli, Franco, 42015 Correggio (Reggio Emilia) (IT)
(72) Inventor: Ferrari, Gino, 42015 Correggio (RE) (IT); Maioli, Franco, 42015 Correggio (Reggio Emilia) (IT)
(74) Representative: Crugnola, Pietro

(57) **Abstract**

The support device (4) comprises a body (5) provided with coupling means (6) arranged to support an auxiliary apparatus, such as a measuring instrument, of further coupling means (17) arranged to fit said body (5) to an element (1) to be measured, said further coupling means (17) being distinct and separated from said body (5).

## Description

The present invention relates to a support device, particularly suitable for supporting measuring instruments.

In the car industry, high-precision measuring instruments have been used for some time that are suitable for checking wheel alignment and for correcting any faults thereof.

The measuring instruments are fitted to the wheels to be checked by special supports that are connectable to the latter without it being necessary to remove the wheels from the vehicle, and which supports, when they are fitted, have on a side facing the outside of the vehicle, a central shank that coincides with the rotation axis of the wheels and on which the instruments can be fitted: for this purpose all the instruments are provided with a specific hole that is suitable for coupling with the aforementioned shank.

The supports comprise a substantially flattened frame, normally triangular in shape, having a face from which the aforementioned shank protrudes and from an opposite face of which three feet project that are orthogonal to the tops of the frame, placed at 120° from one another and parallel to the shank, which protrudes from the frame to be rested on the wheels, more precisely on the rims thereof.

The feet are movable in a synchronised manner along the tops, by means of a specific driving device, running parallel to them inside specific slots obtained in the frame, in a direction that diverges to the tops of the frame, or converges on the centre thereof; in this way, the three feet can be adapted to the various diameters of the rims to rest with precision on the edges of the latter: for this reason, each foot is provided, at the end facing the wheel of a vehicle, with a shaped appendage that is couplable with the profile of the rims.

The frame is then provided, on two opposite sides, with two arms that are movably articulated oscillating on a plane orthogonal thereto and to the wheel, around connecting and contrast hinges of respective return springs.

The arms have curved claws at the ends that are suitable for gripping the tread of the tyres, by inserting themselves in the grooves of the latter.

In detail, the operators, in order to fit the measuring instruments in the work position, first have to connect the support to the wheel and then insert the instrument into the shank with which the latter are provided: in this way the instruments are cantilever, discharging their weight entirely onto the support.

In order to fit the support firmly on the wheel, the operators first have to spread out the arms and rest the feet on the edge of the rim, after adjusting their distance from one another, until the shaped appendages rest precisely on the edge of the rim; subsequently, they have to grasp the arms and by pushing them to the wheel they fit the claws on the thread of the tyre, overcoming the powerful contrasting action of the return springs of each arm.

The support thus rests on the wheel by means of the feet and remains attached to it by means of the traction action of the arms.

When the support is fixed firmly on the wheel, the measuring instrumentation is fitted to the shank.

In some cases, in order to correctly arrange the wheels to carry out measurements or to check alignment of the instruments, the vehicle has to be moved forwards or backwards.

This creates a first drawback that consists of the fact that this movement is limited by the presence of the claws that grip the treads and which, by protruding from the latter, enable the wheel to carry out only a half revolution on itself and definitively, rectilinear motion of the vehicle is limited to a few centimetres, which are often not sufficient for the needs of the operators.

A second drawback that besets known supports is that positioning of the claws on the treads of the tyres is particularly inconvenient and tiring because it requires a significant muscular effort to overcome the force of the return springs of the arms and return them to the wheels and a particular coordination of movements by the operators, who simultaneously have to hold up the support and keep the feet resting against the edge of the rim of a wheel, grasp the arms and move them to the tyre for the grip of the claws in the grooves thereof, thus overcoming, as said, the significant force of the return springs.

The force of the return springs is significant because, when the support is fitted, the forces have to bear their own weight and the weight of the measuring instrument fitted cantilever-fashion to the latter.

The object of the invention is to improve the prior art.

An object of the invention is to devise a support device that, even if it is fitted to a wheel, enables the vehicle to be moved on which it is assembled, which movements correspond to one or more revolutions of the wheel.

Another object of the invention is to devise a support device that does not require particular effort on the part of the operators to be fitted to the wheels.

Another object of the invention is to devise a support device that is convenient and rapid to use.

According to the invention, a support device is provided comprising a body provided with coupling devices arranged to support an auxiliary apparatus, such as a measuring instrument, is provided with further coupling means arranged to fit said body to an element to be measured, characterised in that said further means is distinct and separate from said body.

Further features and advantages of the invention will be clearer from the disclosure of a preferred but not exclusive embodiment of a support device, illustrated by way of non-limitative example, in the attached tables of drawings, wherein:
Figure 1 shows a first embodiment of a support device, fitted on a wheel of a vehicle, in a configuration preceding the fitting of a precision instrument;
Figure 2 shows a second embodiment of a support device, fitted on a wheel of a vehicle, in a configuration preceding the fitting of a precision instrument;
Figure 3 shows connecting means to a support wheel of the support device in the embodiment in Figure 1;
Figure 4 shows laterally the connecting device of Figure 1, fitted to a wheel and in a configuration preceding the fitting of a precision instrument;

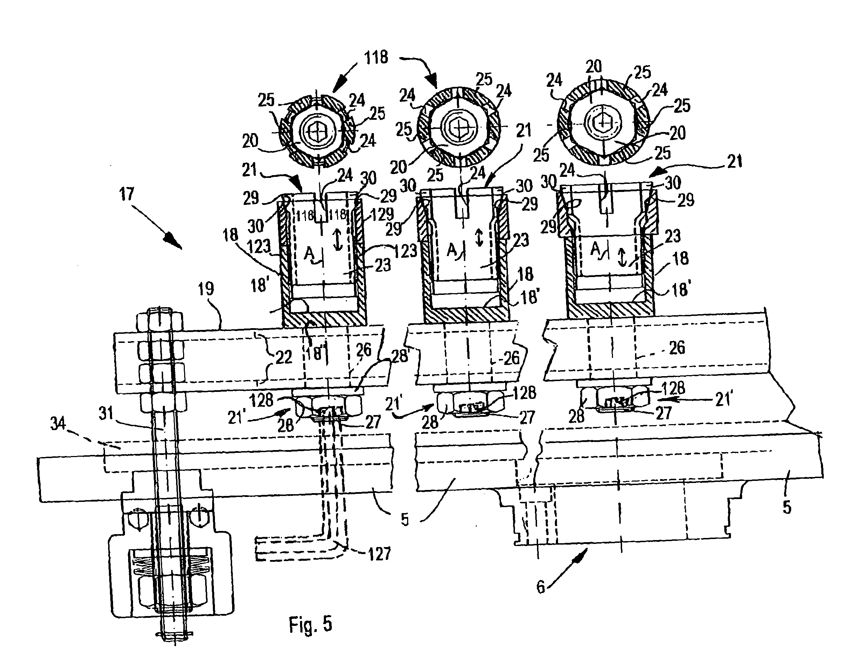

Figure 5 shows a fragmentary section of connecting means of the support of a wheel;

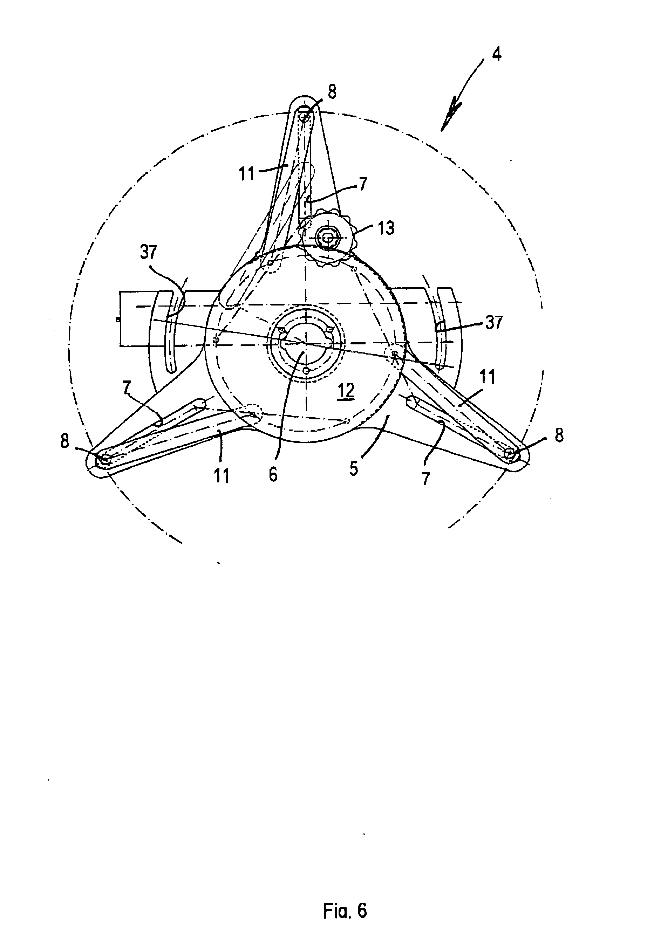

Figure 6 is a schematic front view of the support device in Figure 1.

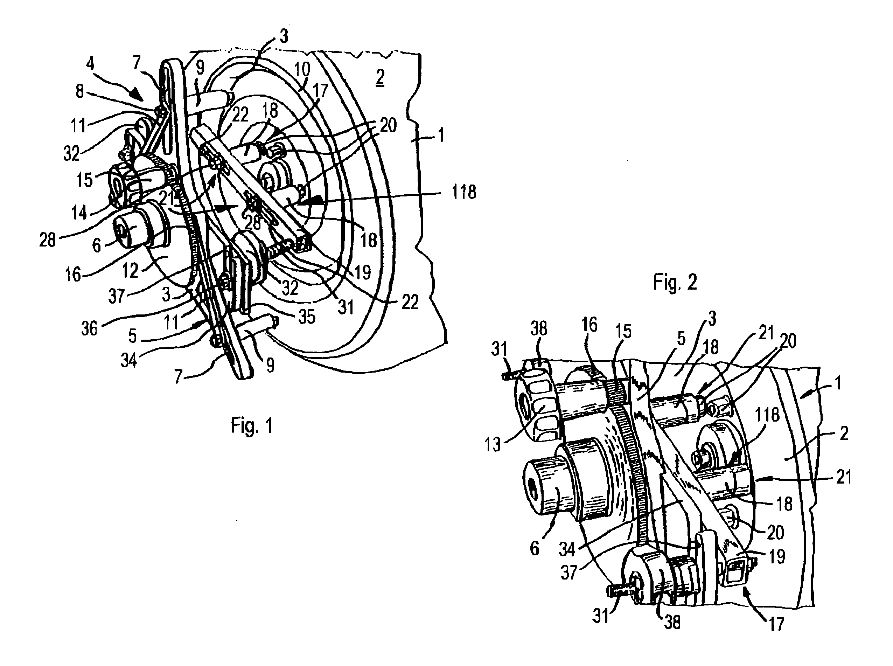

With reference to Figure 1, 1 indicates a wheel of a vehicle that consists of a tyre 2 and of a rim 3 on which the tyre 2 is fitted.

A support device is indicated overall with 4 and comprises a body 5 with a triangular and flattened shape from a face of which, facing externally, a shank 6 protrudes in a central position on which precision instruments are fittable for measuring the alignment parameters of the wheel 1.

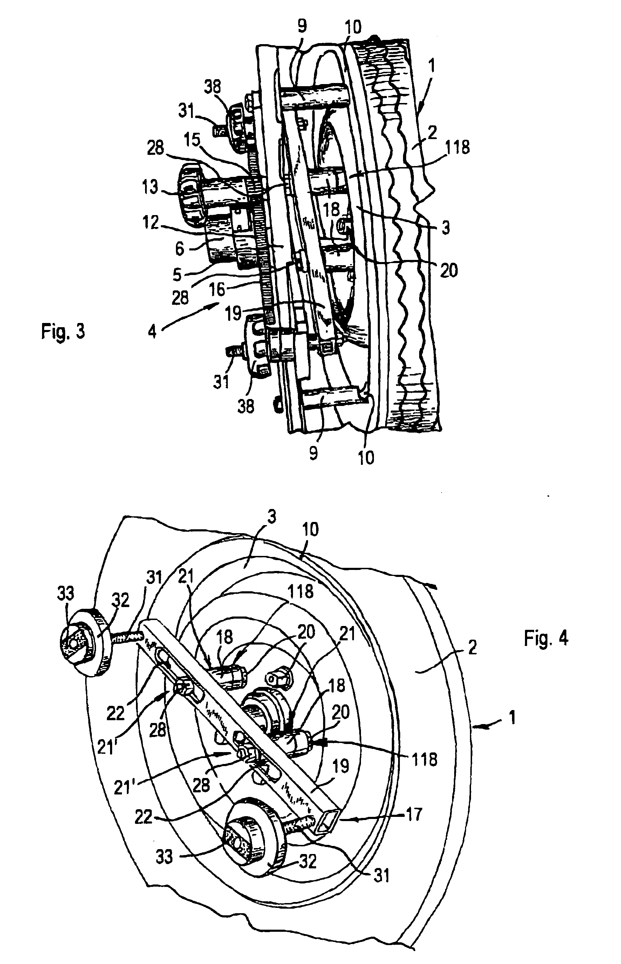

In a radial direction and facing the tops, the triangular body 5 has three rectilinear slots 7 in which corresponding cursor elements 8 are engaged to which the ends of corresponding feet 9 are connected that are orthogonal to the body 5 and are suitable for being rested on the edge 10 of the rim 3, as visible in Figure 4.

The movements of the elements 8 are synchronised together and are activated by means of connecting rods 11 that connect the respective cursor elements 8 to a circular toothed crown 12 that is fitted to the body 5, coaxial with the shank 6.

The toothed crown 12 is manually rotatable in the two directions by the operators by means of a knob 13, which is also fitted rotating on the body 5 in a position adjacent to the toothed crown and has the stem 14 provided peripherally with teeth 15 that engage with peripheral teeth 16 with which the toothed crown 12 is provided.

The body 5 is connectable to the wheel 1 by coupling means 17 that is independent therefrom in order to be able to be fitted to the wheel 1 before the body 5 and which comprises a pair of spindle means (118); this comprises respective sleeves 18 that are fitted on a crosspiece 19 that are free to slide on the latter and to rotate around their own longitudinal axis A.

The sleeves 18 have first ends facing the wheel 1 provided with prehensile means 21 to clamp onto at least two corresponding heads of bolts or nuts 20 that protrude from the rim 3 and which are normally used to press the latter to the hub of the vehicle, which is not visible in the drawings; the opposite ends of the sleeves 18 are provided with positioning members 21', that are suitable for keeping the bottoms 18'' of the sleeves 18 in contact with the crosspiece 19, but are freely slidable along corresponding slots 22 obtained longitudinally therein.

The prehensile means 21 comprises second sleeves 23 that are received coaxially slidable inside the sleeves 18 and which have ends facing the wheel 1 that have blind longitudinal incisions 24 that are parallel to the axes of the sleeves 18 and are distributed circumferally at a constant pitch suitable for defining a female mouth with a hexagonal perimeter for accommodating the nuts or the heads of bolts 20 and which form a sort of spindle with slightly flexible clamps 25.

The bottoms 18'' of the sleeves 18 opposite the wheel 1 are on the other hand provided with the aforementioned positioning means 21'; the latter comprises respective stems 26 that protrude fixed coaxially from the bottoms 18'' and traverse, engaging them, a respective slot 22, protruding from the opposite part of the crosspiece 19 with a portion 27.

This portion 27 is provided with perimeter threading on which a corresponding nut 28 is tightenable that rests in a contrasting manner on the crosspiece 19, with the interposition of a washer 28'.

Each portion 27 presents, at the head, a hollow seat 128 with a geometrical, for example hexagonal, perimeter, in which the end of a tool is engageable, for example an Allen key 127, with which it is possible to rotate on itself the stem 26 in the slot 22 and therefore the corresponding sleeve 18 around its own longitudinal axis A.

Between each sleeve 18 and the corresponding second sleeve 23, respective internal 118 and external 123 threads are interposed that engage with each other.

Furthermore, the mouthpieces of the sleeves 18 facing the wheel 1 are provided with peripheral rings 129 that have an internal flare 29 with a substantially frustum-conical extent converging towards the axis A and which is suitable for resting on and pushing on corresponding diverging profiles 30, these also being substantially frustum-conical, with which the clamps 25 are provided; accordingly, when the second sleeves 23 are slid and made to return into the sleeves 18, as disclosed below, the clamps 25 are pressed in a direction that is centripetal from the internal flares 29 of the rings 129, tightening the corresponding nut or head of a bolt 20; on the other hand, when the second sleeves 23 are slid outwardly, the clamps 25 regain their original position, spread out radially.

The second sleeves 23 are moved into the sleeves 18 by rotating the stems 26 and then the sleeves 18 by means of the Allen key 127 fitted in the hollow seat 128.

Rotation of the sleeves 18 causes tightening of the thread 118 inside the external thread 123 and therefore the axial sliding of the second sleeves 23, making them return by a portion inside the sleeves 18.

The clamps 25, pushed centripetally by the flare 29 acting on the diverging profiles 30, close on the heads of the bolts or nuts 20, clamping them.

On the other hand, by rotating the sleeves 18 on the opposite side, the second sleeves 23 are pushed outwards, releasing the aforementioned nuts or heads of bolts 20.

At least a pair of threaded stems 31 that are parallel to one another and to the sleeves 18 protrude orthogonally but opposite the sleeves 18.

In a first possible embodiment of the support device 4, on the threaded stems 31 respective heads 32 are tightenable that each have a magnetic element 33.

To achieve a stable fitting between the body 5 and the connecting means 17, the aforementioned body 5 is provided, on the face facing the wheel 1, with a rectilinear bracket 34 fixed relative to it and which carries, substantially at the heads 32 and facing the latter, two metal plates 35 suitable for being placed in attracting contact with the magnetic elements 33 and which are in turn connected to the bracket by screw members 36 that engage corresponding slots 37 obtained in the bracket 34.

In a second embodiment of the support device 4 on the threaded stems 31 corresponding clamping knobs 38 are tightenable that engage the ends of the aforementioned threaded stems 31 that, in this case, directly engage the slots 37, from which the screw members 36 have been removed that clamp the metal plates 35, clamping together the body 5 and the coupling means 17.

The knobs 38 may be dynamometric, i.e. be fitted with preset and limited clamping force to prevent an excess of such force forcing and flexing the bracket 34 or the crosspiece 19, thus altering the orientation of the shank 6 and therefore the correct positioning of a precision instrument fitted on the latter.

The operation of the support device 4 is as follows: the crosspiece 19 is first fixed to a wheel 1 that is to be checked.

In order to fix the crosspiece 19, the sleeves 18 are fitted onto corresponding nuts or heads of bolts 20 that are usually used to tighten the wheel 1 on its hub.

The sleeves 18 are slid along the slots 22 to adapt to the preselected distance of the nuts or heads of bolts and then, by means of an Allen key 127 fitted into the hollow seat 128, they are rotated around their axis A.

As the second sleeves 23 remain stationary, being fitted on the nuts or heads of bolts 20, the rotation set for the sleeves 18 tightens the internal thread 118 of the sleeves 18 on the external thread 123 of the second sleeves 23.

This tightening causes the progressive return of the second sleeves 23 into the sleeves 18 and consequent pressure of the flares 29 on the diverging profiles 30 of the clamps 25, causing flexure of the latter in a centripetal direction until they close completely on the nuts or heads of bolts 20 and fix the crosspiece 19 on the wheel 1.

In the body 5 the positions of the feet 9 are adjusted by rotating the knob 13.

This causes the rotation of the toothed crown 12 and the synchronous shift of the cursor elements 8, and therefore of the feet 9 connected to them, along the radial slots 7 until they reach the diameter of the rim 3 to rest on the edge 10 of the latter.

The body 5, in the first possible embodiment of the support device 4, is provided with two metal plates 35 that are clamped thereto by a bracket 34 and is provided with respective screw members 36 that engage in corresponding slots 37 obtained in the latter.

Correspondingly, the crosspiece 19 is provided with a pair of threaded stems 31, on which the heads 32 are tightened that are provided with magnetic elements 33 that make contact with the metal plates 35, keeping them clamped thereto.

By adjusting the position of the heads 32 along the threaded stems 31 the condition is reached in which all the feet 9 come to rest on the edge 10 of the rim 3: in this configuration the support device 4 is firmly connected to the wheel 1 to be checked and is ready to receive a precision instrument fitted on the shank 6 that is in a position that is coaxial to the wheel 1 owing to the support of the feet 9 on the edge 10.

In a second possible embodiment of the support device 4, the crosspiece 19 is fixed to the wheel 1 as described previously.

The body 5, on the other hand, is subsequently fixed to the crosspiece 19, still after adjusting the position of the feet 9, so that the latter can be rested at rotationally symmetrical points of the edge 10 of the rim 3.

The threaded stems 31 traverse the slots 37 perpendicularly and at the ends of the latter that protrude opposite the wheel 1 the knobs 38 are tightened that clamp the body 5 to the crosspiece 19, until the feet 9 rest on the edge 10 of the rim 3.

It should be noted that the knobs 38 may be of the dynamometric type, namely with a preset clamping force, beyond which tightening the knobs 38 does not produce any further increase in clamping force: this prevents excess force from being able to make orientation of the shank 6 imprecise on which the precision instruments have to be fitted for the check.

It should be noted that the length of the crosspiece 19 and of the bracket 34 are such as to be contained inside the diameter of the wheel 1: in this way, the latter can be rotated on the support plane without any limitation even if a precision instrument is fitted to the support device 4.

To dismantle the support device 4, the opposite procedure is followed to the one disclosed for assembly.

## Claims

1. Support device (4), comprising a body (5) provided with coupling means (6) arranged to support an auxiliary apparatus, such as a measuring instrument, provided with further coupling means (17, 18, 118, 19, 21, 21', 31) arranged to fit said body (5) on an element (1) to be measured, **characterised in that** said further coupling means (17, 18, 118, 19, 21, 21', 31) is distinct and separate from said body (5).

2. Support device (4) according to claim 1, wherein said elements (1) to be measured are vehicle wheels.

3. Support device (4) according to claim 1 or claim 2 wherein said vehicle wheels are fixed to respective vehicle supporting means with fixing members (20).

4. Support device (4) according to any one of claims 1 to 3, wherein said further coupling means comprises:
- a cross member (19) provided on a first face facing said element (1) to be measured of spindle means (118) for gripping said fixing members (20),
- removable fitting means (32, 35; 31, 38) of said body (5) to said cross member (19) protruding from a second face opposite said first face.

5. Support device (4) according to claim 4, wherein said spindle means (118) has first ends provided with prehensile means (21) suitable for grasping said fixing members (20) and second ends opposite said first ends provided with positioning means (21') that is adjustable on said cross member (19).

6. Support device (4) according to claim 5, wherein said positioning means (21') comprises:
- threaded stem means (26) protruding from said second end,
- corresponding through slot means (22) obtained longitudinally in said cross member (19) and suitable for receiving said threaded stem means (26),
- nut means (28) tightenable on said threaded stem means (26) and clampable on said cross member (19) keeping said spindle members slidable along said cross member (19) and rotating around a longitudinal axis (A).

7. Support device (4) according to claim 5, wherein said spindle means (118) each comprises:
- a first slidable fitted sleeve (18), guided in said slot means (22), along said cross member (19) and freely rotating along itself around a longitudinal axis (A), said sleeve (18) having an open end facing said element (1) to be measured and the opposite end provided with said positioning means (21'),
- a second sleeve (23) received coaxially slidable backwards and forwards inside said first sleeve (18) and provided with a first end facing said element to be measured of a coupling opening with said fixing members (20), threads (118, 123) engaged with each other being interposed between said sleeve (18) and second sleeve (23).

8. Support device (4) according to claim 5 or 7 wherein said prehensile means (21) comprises:
- a plurality of incisions (24) obtained longitudinally parallel in said first end of each second sleeve (23) and defining a plurality of slightly flexible radial clamps,
- a ring (129) fitted on said plurality of clamps and having a first flared internal edge (29) with a substantially conical profile converging on the inside of said sleeve (18),
- second flared edges (30) with extent diverging towards said element (1) to be measured, obtained protruding externally from said clamp of said plurality of radial clamps and suitable for sliding along said first internal flared edge (29) to flex said radial clamps and make them converge centripetally on one another or make them diverge radially.

9. Support device (4) according to claim 1, or 4, wherein said removable fixture means (32, 35; 31, 38) comprises:
- threaded pivot elements (31) protruding from said second face of said cross member (19),
- respective magnetic elements (32, 33) tightenable on said threaded pivot means (31) and having an attraction surface facing said body (5).

10. Support device (4) according to claim 4 wherein said removable fixture means (32, 35; 31, 38) comprises:
- threaded pivot means (31) protruding from said second face of said cross member (19),
- corresponding through (37) slots obtained in said body and suitable for receiving in a through manner said threaded pivot means (31),
- clamping means (38) tightenable on said pivot means (31) to clamp said body (5) to said cross member (19).

11. Support device (4) according to claim 9, wherein said body (5) is provided with counter-elements magnetically attractable and faceable to said magnetic elements (33) to retain said body (5) connected to said cross member (19).

12. Support device according to claim 8, wherein said clamping means (38) is of the dynamometric type.

13. Method for applying measuring instruments to elements (1) to be measured, **characterised in that** it comprises:
- fixing coupling means (17, 18, 118, 19, 21, 21', 31) to said elements (1) to be measured,
- coupling body means (5) arranged to support said measuring instruments with said coupling means (17, 18, 118, 19, 21, 21', 31),
- fitting a measuring instrument to said body means (5).

14. Method according to claim 13, wherein between said coupling and fitting setting up said body means (5) with adjustable support means (9) adjustable for supporting said body means (5) in a preset position on said elements (1) to be measured is provided for.

15. Method according to claim 13, or 14, wherein said elements (1) to be measured are vehicle wheels.

16. Method according to claim 14, or 15, wherein said preset position is a centred position in relation to the diameters of said vehicle wheels.

17. Method according to any one of claims 13 to 16, wherein said adjustable support means (9) comprises at least three parallel feet means protruding from said body means (5), facing said elements (1) to be measured and provided with adjusting means (8, 11, 12, 13) of the reciprocal distances to adapt to preset rest points on said elements (1) to be measured.
